# EUROPEAN PATENT APPLICATION

(11) **EP 4 358 226 A1**
(43) Date of publication of application: **24.04.2024**
(21) Application number: 23197331.4
(22) Date of filing: 14.09.2023
(51) Int. Cl.: H01M 10/42, H01M 10/48, H01M 50/30, H01M 50/449

(54) **CHEMICAL COATING FOR BATTERY SEPARATOR INDICATING BATTERY CELL HAZARD**

(30) Priority: 18.10.2022 IN 202211059502
(71) Applicant: Honeywell International Inc., Charlotte, NC 28202 (US)
(72) Inventor: JAYAKUMAR, Prince Ashwin Kumar Anburaj, Charlotte, 28202 (US); KUMAR, Nirmal A., Charlotte, 28202 (US)
(74) Representative: Haseltine Lake Kempner LLP

(57) **Abstract**

An battery cell, a battery cell hazard detection system, and a method for detecting a hazardous battery condition at an early stage is provided. An example battery cell may include a battery cell package defining an interior compartment of the battery cell. The battery cell may further include an anode disposed in the interior compartment of the battery cell, a cathode disposed in the interior compartment of the battery cell, and a separator positioned between the anode and the cathode. A chemical coating may be disposed on the surface of the separator, such that, in an instance in which an interior temperature within the interior compartment of the battery cell exceeds a pre-determined maximum operating temperature, the chemical coating may evaporate, forming a chemical coating vapor indicating to a sensing device the hazardous condition of the battery cell.

## Description

### TECHNOLOGICAL FIELD

Embodiments of the present disclosure relate generally to battery cells, and more particularly, to detecting a hazardous condition of a battery cell.

### BACKGROUND

Applicant has identified many technical challenges and difficulties associated with determining a hazardous condition of a battery cell in the early stages. Through applied effort, ingenuity, and innovation, Applicant has solved problems related to detecting a hazardous internal condition of a battery cell in the early stages by developing solutions embodied in the present disclosure, which are described in detail below.

### BRIEF SUMMARY

Various embodiments are directed to an example apparatus and system for detecting a hazardous condition of a battery cell in the early stages of a hazardous event.

In accordance with some embodiments of the present disclosure, an example battery cell is provided. In some embodiments, the battery cell may comprise a battery cell package defining an interior compartment of the battery cell. The battery cell may further include an anode disposed in the interior compartment of the battery cell, a cathode disposed in the interior compartment of the battery cell, a separator positioned between the anode and the cathode, and a chemical coating disposed on the surface of the separator, such that, in an instance in which an interior temperature within the interior compartment of the battery cell exceeds a pre-determined maximum operating temperature, the chemical coating evaporates, forming a chemical coating vapor indicating to a sensing device a condition of the battery cell.

In some embodiments, the chemical coating may be a chemical having a boiling point between 80 degrees Celsius and 120 degrees Celsius.

In some embodiments, the chemical coating may be a class C2 combustible liquid with a flash point below 120 degrees Celsius.

In some embodiments, the chemical coating may be applied using at least one of submersion, spray coating, deposition, and curtain coating.

In some embodiments, the sensing device may be external to the battery cell.

In some embodiments, the battery cell package may further comprise a vent, such that the chemical coating vapor exits the interior compartment of the battery cell through the vent.

In some embodiments, the sensing device may identify the chemical coating vapor using photoionization techniques.

In some embodiments, the sensing device may identify the chemical coating vapor using optical sensing techniques.

In some embodiments, the condition indicated may be an onset of a thermal runaway event.

In some embodiments, the pre-determined maximum operating temperature may be between 80 degrees Celsius and 120 degrees Celsius.

An example battery cell hazard detection system is further provided. In some embodiments, the battery cell hazard detection system may comprise a battery cell comprising: a battery cell package defining an interior compartment of the battery cell, an anode disposed in the interior compartment of the battery cell, a cathode disposed in the interior compartment of the battery cell, a separator positioned between the anode and the cathode, a chemical coating disposed on the surface of the separator, and a vent. In some embodiments, in an instance in which an interior temperature within the interior compartment of the battery cell exceeds a pre-determined maximum operating temperature, the chemical coating may evaporate forming a chemical coating vapor that exits the interior compartment of the battery cell through the vent. The battery cell hazard detection system may further comprise a sensing device disposed proximate the exterior of the battery cell, wherein the sensing device is configured to detect the chemical coating vapor indicating a condition of the battery cell.

In some embodiments, the chemical coating may comprise a chemical having a boiling point between 80 degrees Celsius and 120 degrees Celsius.

In some embodiments, the chemical coating may be a class C2 combustible liquid with a flash point below 120 degrees Celsius.

In some embodiments, the chemical coating may be applied using at least one of submersion, spray coating, deposition, and curtain coating.

In some embodiments, the sensing device may identify the chemical coating vapor using photoionization techniques.

In some embodiments, the sensing device may identify the chemical coating vapor using optical sensing techniques.

In some embodiments, the condition indicated may be an onset of a thermal runaway event.

In some embodiments, the pre-determined maximum operating temperature may be between 80 degrees Celsius and 120 degrees Celsius.

An example method for detecting an event indicative of a battery condition is further provided. In some embodiments, the method may comprise receiving at a sensing device a portion of a vapor of a chemical coating, wherein the chemical coating is disposed on a surface of a separator positioned between an anode and a cathode of a battery cell, and wherein in an instance in which an interior temperature within the battery cell exceeds a pre-determined maximum operating temperature, the chemical coating may evaporate creating the vapor that exits the battery cell through a vent. In some embodiments, the method may further comprise detecting, via a sensing device, the vapor of the chemical coating, and transmitting an alert indicating the vapor of the chemical coating is detected.

In some embodiments, the chemical coating may be a chemical having a boiling point between 80 degrees Celsius and 120 degrees Celsius.

### BRIEF DESCRIPTION OF THE DRAWINGS

Reference will now be made to the accompanying drawings. The components illustrated in the figures may or may not be present in certain embodiments described herein. Some embodiments may include fewer (or more) components than those shown in the figures in accordance with an example embodiment of the present disclosure.
FIG. 1 illustrates the internal components of an example battery cell in accordance with an example embodiment of the present disclosure.
FIG. 2 illustrates example layers within a battery cell in accordance with an example embodiment of the present disclosure.
FIG. 3 illustrates dendrite growth within the example layers of a battery cell in accordance with an example embodiment of the present disclosure.
FIG. 4 illustrates an example chemical coating applied to a surface of a battery cell separator in accordance with an example embodiment of the present disclosure.
FIG. 5 illustrates the evaporation of the example chemical coating in a hazardous condition in accordance with an example embodiment of the present disclosure.
FIG. 6 illustrates an example power system utilizing an example battery cell hazard detection system in accordance with an example embodiment of the present disclosure.
FIG. 7 depicts a flowchart illustrating an example method for detecting a hazardous condition in accordance with an example embodiment of the present disclosure.

### DETAILED DESCRIPTION

Example embodiments will be described more fully hereinafter with reference to the accompanying drawings, in which some, but not all embodiments of the inventions of the disclosure are shown. Indeed, embodiments of the disclosure may be embodied in many different forms and should not be construed as limited to the embodiments set forth herein; rather, these embodiments are provided so that this disclosure will satisfy applicable legal requirements. Like numbers refer to like elements throughout.

Various example embodiments address technical problems associated with detecting a hazardous condition of a battery in the early stages. As understood by those of skill in the field to which the present disclosure pertains, there are numerous scenarios in which it may be advantageous to detect a hazardous condition of a battery in the early stages, enabling sufficient time to perform a mitigating response.

Batteries (e.g., lithium-ion batteries, lithium-polymer batteries, etc.) may undergo a chemical reaction within a battery cell to supply power to various devices. In general, a battery cell utilizes a chemical reaction to produce an output power supply. Such a chemical reaction involves transmitting ions between a positively charged electrode (cathode) and a negatively charged electrode (anode). An insulator, called a separator, is placed between the anode and cathode to prevent the flow of electrons directly between the two electrodes. In addition, the separator is coated in an electrolyte that enables the transfer of ions from the anode to the cathode and vice versa. As an example, when providing current to a load, ions move from the anode and through the separator to the cathode. The surplus electrons, instead of traveling through the separator, are carried out of the negative battery terminal, through the load and back into the battery cell through the positive battery terminal. The flow of the electrons from the anode to the cathode generates electric current flowing from the cathode to the anode. When a battery cell is charged, ions move the opposite way through the separator, for example, from the cathode to the anode.

A battery cell may contain any of a large variety of chemical compositions (e.g., lithium-nickel-manganese-cobalt oxides, lithium-iron phosphates, etc.). The chemical reactions occurring in these batteries may be susceptible to dangerous battery conditions, such as a thermal runaway event. In general, the amount of heat generated by the chemical reactions in a normal operating battery can be easily dissipated. However, in a thermal runaway event, an anomaly in the battery, such as an internal short circuit, causes the chemical reactions to generate heat faster than the heat may be dissipated. The generated heat causes the temperature of the battery cell to increase uncontrollably until the cell combusts. Devices requiring substantial amounts of power, such as electric vehicles, may contain tens or even hundreds of battery cells in a battery compartment. Hazardous battery conditions, such as thermal runaway, may cause a chain reaction, for example, when one battery cell begins to enter into thermal runaway, the exothermic reaction of the battery cell may propagate to all cells within the battery compartment, eventually causing the battery compartment to combust.

The onset of a thermal runaway event can be caused by various forms of battery abuse, such as mechanical (e.g., impacts and punctures), electrical (e.g., overcharging), and/or thermal abuse (e.g., high temperature operation). In many instances, abuse of a battery over an extended period of time may be a major factor leading to thermal runaway. Overcharging, over-discharging, exposure to high and low temperatures, impacts to the battery pack, and/or physical damage to the battery pack, may all effect the internal operation of the battery, especially when the abuse occurs over an extended period of time. In some instances, mechanical abuse, such as a crushing force on a battery cell may push the anode and cathode together and lead to deterioration of the separator and/or an internal short circuit. In another instance, an internal short circuit may be caused by the formation of dendrites on the surface of the anode. Dendrites are metallic microstructures that may form on the surface of the anode during the charging process. Dendrite growth (sometimes referred to as plating) may occur when lithium ions accumulate on the surface of the anode and are unable to absorb into the anode. These lithium ion accumulations on the surface of the anode can form into pointed structures that may penetrate the separator and contact the cathode electrode, causing a short circuit. The possibility of short circuits due to dendrite growth becomes more likely as batteries are manufactured with lighter and thinner materials.

The occurrence of a short circuit may cause an increase in the internal heat of the battery cell triggering a thermal runaway condition. In some instances, chronic overcharging and/or discharging may lead to plating and the formation of these dendrites. In addition, in some instances, the chemical properties of the chemicals within the battery cell may slowly change over time due to mechanical, thermal, and electrical abuses. This type of long-term abuse leading to dangerous battery conditions is often referred to as a latent effect or ghost effect. Latent effects due to long-term abuse can be difficult to identify before the battery condition has deteriorated to a point at which chain reactions and eventual combustion may be impossible to stop.

Current battery management systems may utilize various sensors in close proximity to the battery cells to determine the condition of the battery cell based on the physical characteristics around the battery cell. For example, a temperature sensor may be placed on or near the surface of the battery cell. When the temperature measurement near the battery cell exceeds a pre-determined maximum temperature, the battery management system may issue a warning or alert. Similarly, gas sensors may be placed near the battery cells and may be configured to detect very specific gasses which are released when a thermal runaway event has begun.

However, these techniques for determining a hazardous battery condition have a number of problems. For example, temperature sensors placed on or near the exterior of a battery cell often do not detect a dangerous increase in temperature and issue warnings until the interior battery condition (e.g., thermal runaway) has already progressed to a point such that the thermal runaway is almost impossible to stop. This means the battery will continue to overheat and eventually combust even after the condition is detected and the warning issued. In addition, utilizing gas sensors may also be problematic. Current techniques utilize gas sensors that can only detect gasses after first venting has occurred. Sensors equipped to detect gasses at first venting are costly and susceptible to cross-detection of other gasses in the battery environment. Less expensive gas sensors may detect gasses during the second venting stage of thermal runaway, however, there is little to no time to stop or even mitigate the thermal runaway once second venting has occurred. Another drawback of the current use of gas sensors is that gas sensors configured to detect venting gasses during thermal runaway are configured to detect a small quantity of a specific gas. Sensors configured in this way may be susceptible to false alarms due to noise. In addition, temperature changes at the onset of thermal runaway may inhibit the detection ability of the gas sensors. In general, the current methods may not be able to reliably detect a hazardous battery condition, such as thermal runaway, at an early stage. The lack of detection has led to multiple incidents of battery combustion that have resulted in damage to property, injury, and death.

The various example embodiments described herein utilize various techniques to detect the onset of a hazardous battery condition, such as thermal runaway. For example, in some embodiments, the separator may be coated in a chemical having a boiling point (and/or flash point) above the normal operating temperature of the battery cell (e.g., 80°C) while still enabling the transfer of ions through the separator. In addition, the chemical coating, when vaporized, may be readily detected by a sensing device, such as an optical device configured to detect the optical signature of the vaporized chemical or a gas sensor configured to detect the gas particles.

In an instance in which the temperature within the battery cell rises above a normal operating temperature due to an internal short circuit, or another battery anomaly, the chemical coating on the separator may be vaporized. In some embodiments, the battery cell may additionally include a venting mechanism that allows the vaporized chemical to escape the battery cell. A gas sensor positioned proximate the exterior of the battery cell may be configured to detect the vaporized chemical coating.

As a result of the herein described embodiments and in some examples, the effectiveness of detecting a hazardous battery condition at an early stage may be greatly improved. In addition, selecting a chemical that evaporates at temperatures outside by near the normal operating temperature range will produce the chemical vapor alerting the onset of a hazardous condition in the early stages. The abundance of chemical vapor may enable a gas detector or optical sensor to differentiate the alerting chemical vapor above the noise floor of the sensor. In addition, selecting a chemical coating that produces a vapor that may be differentiated from other gasses present in the battery compartment may aid in identifying the hazardous battery condition in the presence of other environmental gasses while still in the early onset stages of the hazardous condition.

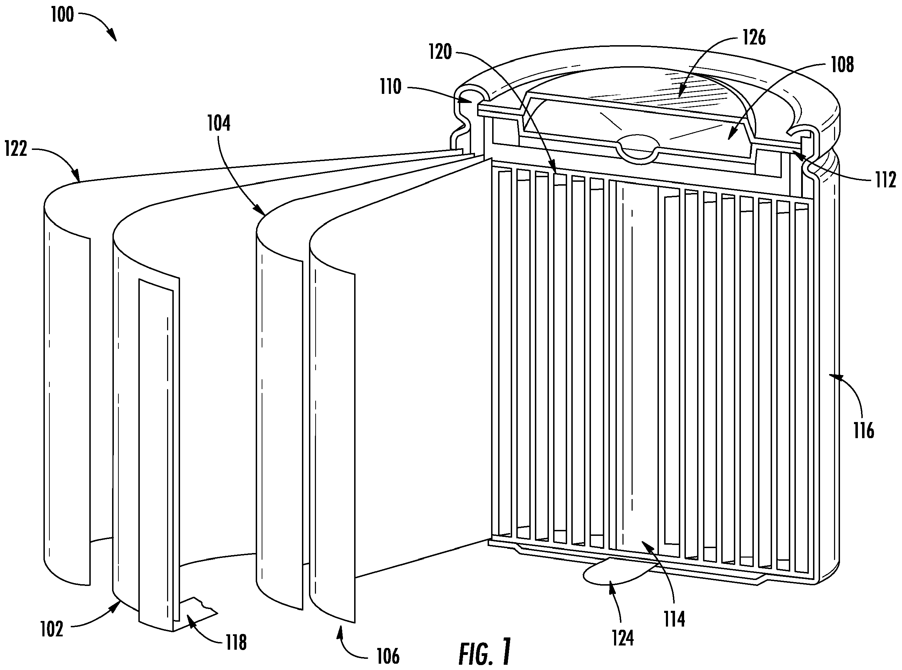

Referring now to FIG. 1, a cross-sectional view of the internal components of a battery cell 100 are provided. The depicted example battery cell 100 of FIG. 1 includes four material layers tightly wound around a center pin 114. The four material layers as depicted in the example battery cell 100 of FIG. 1 include a cathode layer 106 as the innermost layer. Adjacent to the cathode layer 106 is a first separator layer 104 positioned between the cathode layer 106 and an anode layer 102. The outer most layer as depicted in FIG. 1 is an additional separator layer 122. Once the layers are wrapped around the center pin 114, the additional separator layer 122 provides a separating layer between the anode layer 102 and the cathode layer 106. The series of layers wrapped around the center pin 114 is colloquially referred to as the jellyroll. As further depicted in FIG. 1, the example battery cell 100 further includes an anode lead 118 to electrically connect the anode layer 102 to the negative terminal 124 of the battery cell 100, and a cathode lead 120 to electrically connect the cathode layer 106 to the positive terminal 126 of the battery cell 100. In addition, the example battery cell 100 of FIG. 1 further depicts a positive terminal coefficient (PTC) element 110, to limit current to the battery cell 100 as the temperature of the battery cell 100 increases; a gasket 112 to prevent contact between the positive terminal 126 and the negative terminal 124; and a safety vent 108 to release any buildup of gasses within the battery cell package 116 during operation.

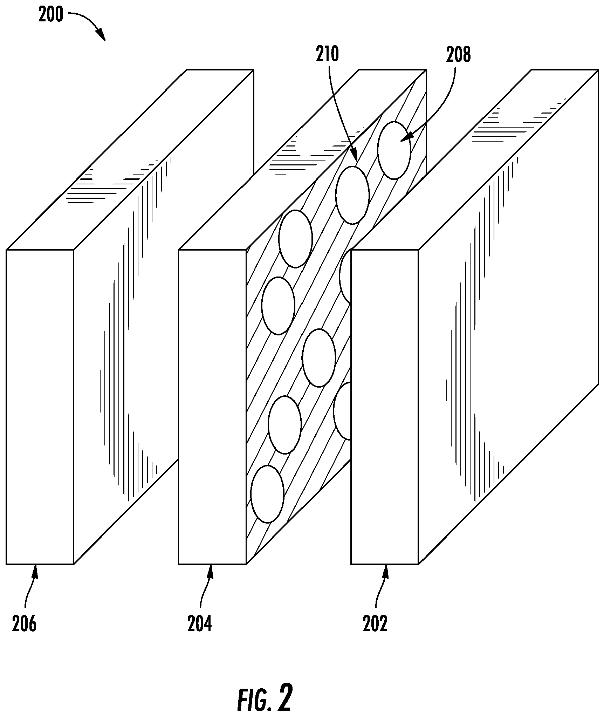

As depicted in FIG. 1, the example battery cell 100 includes a series of layers, or jellyroll (e.g., cathode layer 106, first separator layer 104, anode layer 102, additional separator layer 122), wound around a center pin 114. The anode layer 102 and cathode layer 106 may be any anode/cathode materials that enable the transfer of ions between the two materials (e.g., anode 202 and cathode 206 as further described in relation to FIG. 2). Similarly, the first separator layer 104 may be any material that enables the transfer of ions between the cathode layer 106 and anode layer 102 but inhibits the passage of electrons (e.g., separator 204 as further described in relation to FIG. 2). An additional separator layer 122 is also shown, which in some embodiments, may be substantially equivalent to the first separator layer 104. However, an additional separator layer 122 may be necessary to act as a separator (e.g., separator 204 as further described in relation to FIG. 2) between the anode layer 102 and the cathode layer 106 once the series of layers have been rolled such that the cathode layer 106 may be adjacent to the additional separator layer 122.

As further depicted in FIG. 1, the example battery cell 100 includes a center pin 114 at the center of the jellyroll. The center pin 114 may be any structure that stabilizes the structure at the center of the jellyroll. In some embodiments, the center pin 114 may attach to one or more layers of the jellyroll during production to enable the rolling of the jellyroll. In some embodiments, the center pin 114 may comprise any material that may stabilize the center of the jellyroll during operation, such as steel, metal, plastic, or other similar materials. In some embodiments, the center pin 114 may be hollow such that gasses within the battery cell 100 may escape through the center pin 114 and out the safety vent 108.

As further depicted in FIG. 1, the example battery cell 100 includes a battery cell package 116. The battery cell package 116 may be any structure that may maintain the form of the battery cell 100 such that the jellyroll and other internal battery components are protected from deformation from external forces. The battery cell package 116 may define an interior compartment in which the layers of the jellyroll may be disposed. The battery cell package 116 may comprise steel, metal, plastic, or another rigid material. The protective battery cell package 116 may prevent internal short circuits or other hazardous conditions from occurring due to external forces applied to the exterior of the battery cell package 116.

As further depicted in FIG. 1, the example battery cell 100 includes an anode lead 118 electrically connecting the anode layer 102 to a negative terminal 124. An anode lead 118 may be any conductive material attached to or contacting the anode layer 102 and additionally attached to or contacting the negative terminal 124. The negative terminal 124 may be any conductive material that provides a contact point for a connection external to the battery cell 100. The negative terminal 124 may facilitate the exit of electrons from the anode layer 102 when a load is connected to the battery cell 100 and the reception of electrons to the anode layer 102 when the battery cell 100 is charged.

As further depicted in FIG. 1, the example battery cell 100 includes a cathode lead 120 electrically connecting the cathode layer 106 to a positive terminal 126. A cathode lead 120 may be any conductive material attached to or contacting the cathode layer 106 and additionally attached to or contacting the positive terminal 126. The positive terminal 126 may be any conductive material that provides a contact point for a connection external to the battery cell 100. The positive terminal 126, in some embodiments, may be a protrusion on the battery cell package 116. The positive terminal 126 may facilitate the receipt of electrons to the cathode layer 106 when a load is connected to the battery cell 100 and the exit of electrons from the cathode layer 106 when the battery cell 100 is charged.

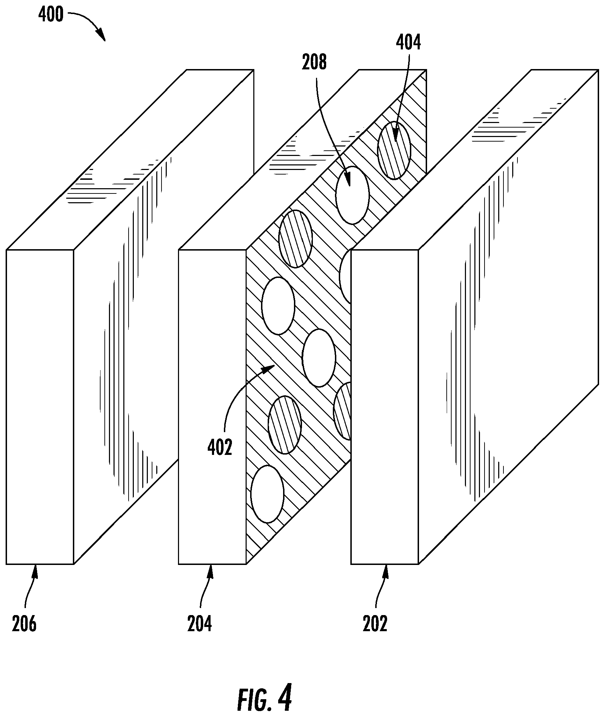

As further depicted in FIG. 1, the example battery cell 100 includes a safety vent 108 (e.g., vent). A safety vent 108 may be any opening, hole, membrane, or other similar structure that facilitates the exit of any buildup of gasses within the battery cell package 116. In some embodiments, the safety vent 108 may comprise a membrane that is intended to break and/or open when the internal pressure of the battery cell package 116 reaches a maximum internal pressure. For example, in some embodiments, the safety vent 108 may comprise a weakened portion of the battery cell package 116, such that when the internal pressure of the battery cell package 116 is below a maximum internal pressure, the gasses are contained within the battery cell package 116. However, if the internal pressure exceeds the pre-determined maximum internal pressure, the seal may break, opening the safety vent 108 and facilitating the exit of any internal gasses built up, including the gasses from the chemical coating on the separator as described in relation to FIG. 4.

As further depicted in FIG. 1, the example battery cell 100 further contains a PTC element 110. A PTC element 110 may be any structure that acts to limit the current through the battery cell 100 when the temperature of the battery cell 100 exceeds a pre-determined maximum operating temperature. The PTC element 110 may comprise any conductive composite material that may increase in resistance as the temperature of the element increases. In this way, as the operating temperature of the device increases over a pre-determined cut-off temperature, the current going into or out of the battery cell 100 is limited.

As further depicted in FIG. 1, the example battery cell 100 further contains a gasket 112. The gasket 112 may be any insulating material that is used to fill the space between the positive terminal 126 and the negative terminal 124. In some embodiments, the battery cell package 116 surrounding the jellyroll is electrically connected to the negative terminal 124. In such an instance, if the battery cell package 116 contacts the positive terminal 126 a short circuit may occur. To avoid such an instance, a gasket 112 may be placed between the positive terminal 126 and the battery cell package 116.

Referring now to FIG. 2, a portion of the components of an example battery cell 200 is provided. The depicted portions include a separator 204 positioned between an anode 202 and a cathode 206. In addition, the separator 204 as depicted in FIG. 2 further includes pores (e.g., separator pore 208) and an electrolyte 210 facilitating the transmission of ions through the separator.

As depicted in FIG. 2, the example battery cell 200 includes an anode 202. An anode 202 may be any electrode through which conventional current enters the battery cell 200 (or, through which the electrons exit the battery cell 200). When a battery is charged, ions (e.g., lithium ions) are stored in the anode 202. In an instance in which a load is electrically connected to the battery cell 200 such that the battery cell 200 is discharging, the anode 202 releases ions through the separator 204 to the cathode 206. In such a process, ions flow to the cathode 206 through the electrolyte 210 surrounding the separator 204, while the free electrons flow out the negative terminal 124 and through the load, providing current. In some embodiments, the anode 202 may comprise carbon or a carbon-based material, such as graphite, typically coated in copper foil.

As further depicted in FIG. 2, the example battery cell 200 includes a cathode 206. A cathode 206 may be any electrode through which conventional current exits the battery cell 200 (or, through which the electrons enter the battery cell 200). In an instance in which a charger is electrically connected to the battery cell 200 such that the battery cell 200 is charging, the cathode 206 releases ions through the separator 204 to the anode 202. In such a process, ions flow to the anode 202 through the electrolyte 210 surrounding the separator 204, while the free electrons flow out the positive terminal 126 and through the charger. In some embodiments, the cathode 206 may comprise oxides derived from lithium, cobalt, nickel, manganese, iron, aluminum, or other metals, typically coated in aluminum foil.

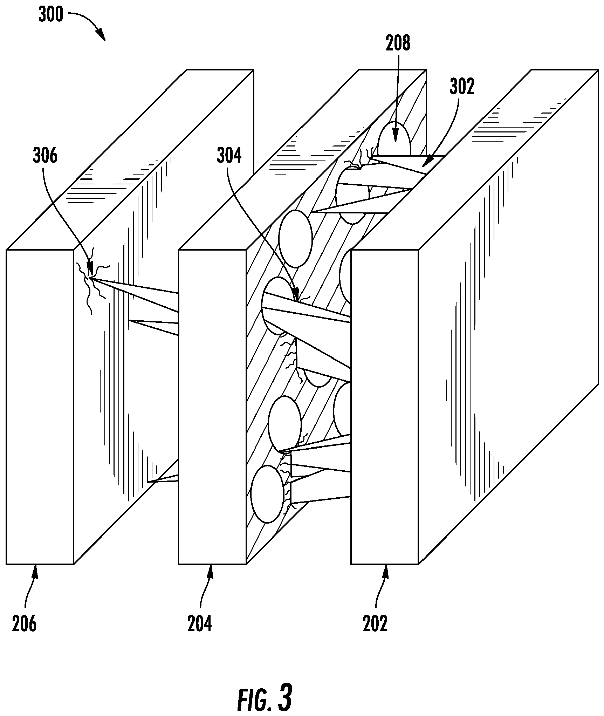

As further depicted in FIG. 2, the example battery cell 200 includes a separator 204. A separator 204 may be any material that forms an insulating barrier between the anode 202 and cathode 206 while still providing passage for positively charged ions. The separator 204 prevents the direct flow of electrons from the anode 202 to the cathode 206 and vice versa. Instead, the separator 204 forces the electrons to flow out one terminal (e.g., negative terminal 124, positive terminal 126) through the load, and into the other terminal (e.g., positive terminal 126, negative terminal 124). A separator 204, may comprise a porous material as depicted in FIG. 3, including pores such as separator pore 208. In some embodiments, the pore size may range from 30 nanometers to 100 nanometers. In some embodiments, the separator 204 may comprise a fibrous material including many openings and passageways allowing the transmission of ions. For example, the separator 204 may comprise microporous membranes, nonwoven materials, electrospun membranes, polymer blends, etc. In some embodiments, the separator 204 may have a porosity between 30 and 50 percent. Not only does sufficient porosity allow ions to move through the separator 204 but the porosity of the separator 204 allows the separator 204 to hold enough of the electrolyte 210 to facilitate the transfer of ions between the anode 202 and cathode 206. In some embodiments, the separator 204 may comprise nylon, cellophane, glass, rubber, or a synthetic resin, such as polyethylene (PE) or polypropylene (PP), or any composite of such materials.

As further depicted in FIG. 2, the example battery cell 200 includes an electrolyte 210 coating the surfaces of the separator 204. The electrolyte 210 may be any medium that enables the movement of ions between the anode 202 and the cathode 206 while not permitting the movement of electrons between the anode 202 and cathode 206. In some embodiments, the electrolyte 210 may enable an oxidation reaction, separating electrons from the atomic particles (e.g., lithium particles) and allowing the ions to be absorbed into the electrolyte 210, while forcing the electrons to flow, for example, out of the negative terminal 124 and into the positive terminal 126 to be reunited with the ions in the cathode 206. In some embodiments, the electrolyte 210 may comprise a salt, for example lithium hexafluorophosphate. In some embodiments, the salt may be dissolved in a solvent. In some embodiments, the electrolyte 210 may comprise a liquid, gel, or dry polymer with additional additives to improve ionic conductivity.

Referring now to FIG. 3, a portion of the components of an example battery cell 300 is provided. As depicted in FIG. 3, the example portion of an example battery cell 300 includes a separator 204 positioned between an anode 202 and a cathode 206. In addition, the example separator 204 includes a plurality of separator pores 208 facilitating the transfer of ions between the anode 202 and cathode 206. Further depicted in FIG. 3 are a plurality of dendrites 302. As shown in FIG. 3, the dendrites 302 have formed on the anode 202, penetrated the separator 204 at point 304, and contacted the cathode 206 at point 306, creating a short circuit.

As depicted in FIG. 3, the example battery cell 300 shows the formation of dendrites 302 on the surface of the anode 202. A dendrite 302 may be any formation and/or accumulation on the surface of an electrode of a battery, such as battery cell 300. In general, dendrites 302 may form when extra ions accumulate on the surface of the anode 202 and are not absorbed into the anode 202. Dendrite 302 formation may be accelerated by overcharging, lower temperature charging, and/or abnormal operating conditions. The composition of the electrolyte 210 may also be a factor in dendrite 302 growth. In some embodiments, dendrites 302 may form protrusions such as metallic microstructures that grow from the surface of the anode 202 toward the separator 204.

As further depicted in FIG. 3, one or more dendrites 302 may grow such that they penetrate the separator 204, such as at point 304. In some embodiments, the dendrites 302 may penetrate the pores (e.g., separator pore 208) of the separator 204. In some embodiments, the dendrites 302 may break and/or deform the separator 204, such that the dendrites 302 may pass all the way through the separator 204. In some instances, one or more dendrites 302 may contact the surface of the cathode 206, such as at point 306, causing a short circuit. A short circuit may increase the internal heat in the battery cell 300, creating heat faster than it may be dissipated and triggering a thermal runaway condition. In such an instance, the internal temperature of the battery cell 300 may drastically increase before the battery cell 300 eventually combusts.

Referring now to FIG. 4, a portion of components of an example battery cell 400 is provided. As depicted in FIG. 4, the example portion of example battery cell 400 includes a separator 204 positioned between an anode 202 and a cathode 206. In addition, the example separator 204 includes a plurality of separator pores 208 facilitating the transfer of ions between the anode 202 and cathode 206. Further depicted in FIG. 4 a chemical coating 402 covers the surface of the separator 204, including filling some of the separator pores 404.

As depicted in FIG. 4, a chemical coating 402 may be applied to the surface of the separator 204. The chemical coating 402 may be any chemical having a boiling point (and/or flash point) above a pre-determined maximum operating temperature of the battery cell 400, that may be applied to the surface of the separator 204 while still allowing the passage of ions through the separator 204, and that may be detected by a sensing device external to the battery cell 400 when vaporized. The chemical coating may be applied by any method, including but not limited to, submersion, spray coating, deposition, and/or curtain coating. As depicted in FIG. 4, in some embodiments, the chemical coating may fill some of the separator pores 404 providing more abundant vaporization of the chemical coating 402 when the boiling point and/or flash point of the chemical coating 402 is reached.

In some embodiments, the chemical coating 402 may be a class C2 combustible liquid with a flash point below 120°C and with a high dielectric constant (e.g., greater than 2). In some embodiments, the chemical coating 402 may have a boiling point between 90°C and 110°C; more preferably between 85°C and 115°C; most preferably between 80°C and 120°C. Coating the separator 204 with a chemical (e.g., chemical coating 402) having a boiling point above a pre-determined maximum operating temperature (e.g., 80°C) of the battery cell 400 may cause the chemical to vaporize in an instance in which the internal operating temperature exceeds the pre-determined maximum operating temperature. Coating the separator 204 with a chemical coating 402 having a boiling point at or near the pre-determined maximum operating temperature may enable detection at the earliest onset of a hazardous battery condition, such as thermal runaway.

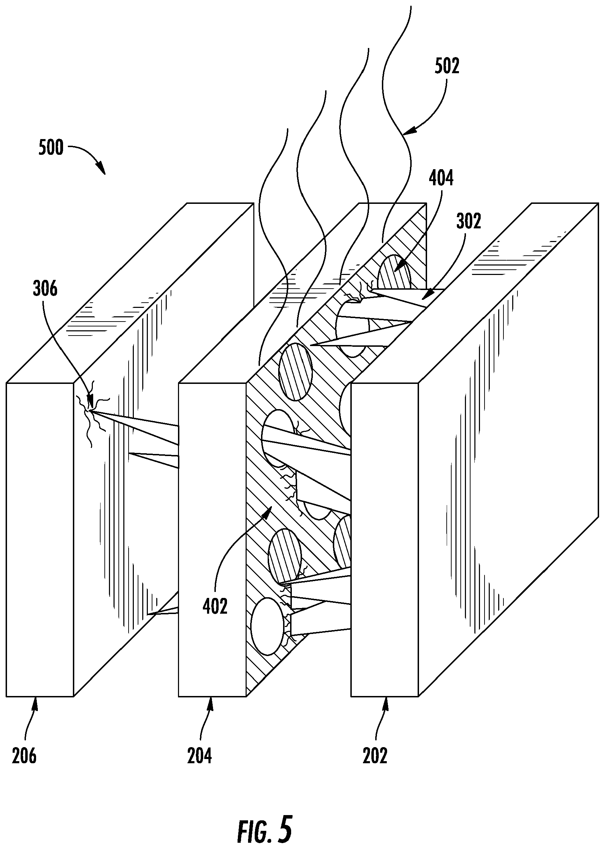

Referring now to FIG. 5, a portion of components of an example battery cell 500 is provided. As depicted in FIG. 5, the example portion of the example battery cell 500 includes a separator 204 positioned between an anode 202 and a cathode 206. In addition, the example separator 204 includes a plurality of separator pores 208 facilitating the transfer of ions between the anode 202 and cathode 206. FIG. 5 additionally depicts the chemical coating 402 covering the surface of the separator 204, including filling some of the separator pores 404. FIG. 5 further depicts a plurality of dendrites 302, at least one of which has breached the separator 204 and contacted the cathode 206 at point 306, creating a short circuit.

As depicted in FIG. 5, in an instance in which a short circuit, or another anomaly of the battery cell 500 occurs causing an increase in the internal temperature of the battery cell 500, the chemical coating 402 may vaporize causing a chemical coating vapor 502 to emit from the separator 204. In some embodiments, the chemical coating 402 may be selected such that the chemical coating vapor 502 may be distinguishable from other gasses present in or near the battery cell 500. For example, a chemical coating 402 may be selected such that the chemical coating vapor has an affinity towards a specific wavelength distinguishable from other gasses in and around the battery cell 500. In such an instance, a spectral sensor may be utilized to detect the specific chemical coating vapor. Additionally, a chemical coating 402 may be selected such that the chemical coating vapor 502 contains distinguishable structures, and/or compounds that may be detected by a gas sensor. In such an embodiment, any type of gas sensor may be utilized to detect the chemical coating vapor 502, for example, a metal oxide gas sensor, an optical gas sensor, an electrochemical gas sensor, an acoustic gas sensor, a photoionization detector, or other similar gas sensor.

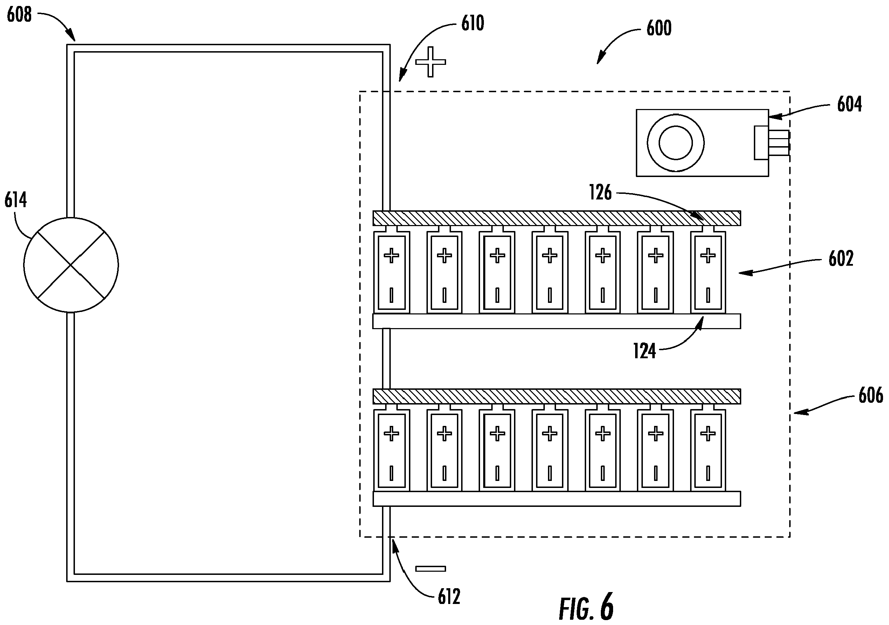

Referring now to FIG. 6, an example battery cell hazard detection system 600 is provided. As illustrated in FIG. 6, the example battery cell hazard detection system 600 includes a plurality of battery cells 100 and a sensing device 604 contained within a battery compartment 606. In addition, the battery compartment 606 includes a positive connector 610 and a negative connector 612 enabling an electrical load connection 608 to provide power to a load 614.

As depicted in FIG. 6, the example battery cell hazard detection system 600 includes a plurality of battery cells 602 (e.g., battery cell 400, battery cell 500). While depicted as a plurality of battery cells 602, the disclosure is not limited to a plurality of battery cells 602 as some embodiments may include a single battery cell (e.g., battery cell 400, battery cell 500). Devices requiring substantial amounts of power, such as electric vehicles, may contain tens or even hundreds of battery cells in a battery package. In some embodiments, to accommodate a vast array of battery cells, electric vehicles are being manufactured using cell-to-chassis technology, which integrates the battery package into the structure of the vehicle. The chemical reactions occurring in these battery cells may be susceptible to dangerous battery conditions, such as thermal runaway events. As described in relation to FIG. 4, the separator 204 within one or more battery cells of the plurality of battery cells 602 may be coated in a chemical coating (e.g., chemical coating 402) with a boiling point (and/or flash point) above, but proximate to, a pre-determined maximum operating temperature of the plurality of battery cells 602. In an instance in which the internal operating temperature rises above the pre-determined maximum operating temperature, the chemical coating may evaporate, pass through the safety vent (e.g., safety vent 108) of the battery cell and into the battery compartment 606.

As further depicted in FIG. 6, the example battery cell hazard detection system 600 includes a sensing device 604. A sensing device 604 may be any electronic, electro-mechanical, optical, or similar device configured to measure the presence of one or more gasses in the surrounding environment. In some embodiments, the sensing device 604 may comprise an optical device such as a spectral sensor utilizing optical techniques to determine the presence of a particular gas. A spectral sensor may use the particular wavelengths absorbed by and/or reflected by a particular vapor/gas for identification of the vapor/gas. For example, a sensing device 604 comprising a spectral sensor may comprise an optical transmitter and receiver. The transmitter may transmit visible and/or non-visible light beams through the surrounding environment towards a receiver. The spectral sensor may then analyze the wavelengths of the received light. The spectral sensor may then identify the gas or gasses present in the environment based on the received spectrum of light. A chemical coating (e.g., chemical coating 402) may be selected based on the chemical coating vapor (e.g., chemical coating vapor 502) produced when the chemical coating is vaporized. For example, a chemical coating may be selected that creates a vapor easily distinguishable based on spectral signature from other gasses that may be present in the battery compartment 606.

In some embodiments, the sensing device 604 may comprise a gas sensor configured to detect one or more gasses. For example, the sensing device 604 may comprise a metal oxide gas sensor, an optical gas sensor, an electrochemical gas sensor, an acoustic gas sensor, a photoionization detector, or other similar gas sensor. In such an embodiment, a chemical coating may be selected based on the gas sensor utilized, such that the chemical coating vapor resulting from the vaporization of the chemical coating may be distinguished from other gasses that may be present in the battery compartment 606.

As further depicted in FIG. 6, the example battery cell hazard detection system 600 includes a battery compartment 606. A battery compartment 606 may be any network, system, and/or housing of one or more battery cells, utilizing chemical reactions to supply power to a device, such as an electric vehicle. The battery compartment 606 may define a space or compartment into which the internal battery components and/or sensing device 604 may be disposed. In such an instance, the battery compartment 606 may comprise aluminum, steel, or other metals; plastics and/or reinforced plastics; or any other material capable of protecting the interior components and plurality of battery cells 602 of the battery. In some embodiments, the battery compartment 606 may provide structures to support, attach, and/or separate the plurality of battery cells 602, as well as wiring, and/or other internal components of the battery cell hazard detection system 600. Additionally or alternatively, a battery compartment 606 may include structures and/or devices to provide cooling to the internal components of the battery cell hazard detection system 600. Many electric vehicles today have begun arranging large numbers of battery cells into a battery compartment 606 that is integrated as part of the body of the electric vehicle. This technology has largely come to be known as cell-to-chassis technology. Such a battery compartments 606 may be particularly prone to thermal runaway and eventual combustion as a result of mechanical, electrical and/or thermal stress and abuse. While the battery cell hazard detection system 600 of FIG. 6 may comprise a physical barrier defining the battery compartment 606, in some embodiments, the battery compartment 606 may not include a physical barrier but may be defined by an area or region.

As further depicted in FIG. 6, the battery cell hazard detection system 600 may further include a positive connector 610 and negative connector 612 providing an electrical load connection 608 to an external load 614. A positive connector 610 may be any surface, structure, feature, port, or contact point that provides an electrical connection to the positive terminal/terminals 126 and subsequently the cathode (e.g., cathode 206) of the plurality of battery cells 602 from a device external to the battery compartment 606. Similarly, a negative connector 612 may be any surface, structure, feature, port, or contact point that provides an electrical connection to the negative terminal/terminals 124 of the plurality of battery cells 602 and subsequently the anode (e.g., anode 202) from a device external to the battery compartment 606.

A load 614 may be any device or process that requires power generated by the plurality of battery cells 602. A load 614 may be for example a motor, such as a motor for an electric vehicle, a digital device, or other similar device. In addition, the load 614 may represent any device or process that recharges the plurality of battery cells 602, such as a charging device. The electrical load connection 608 between the plurality of battery cells 602 and the load 614 facilitates the flow of electrons from the anode 202 to the cathode 206 of each battery cell of the plurality of battery cells 602. For example, when a load 614 is connected via electrical load connection 608 and the plurality of battery cells 602 are being discharged, electrons flow from the anode 202, out the negative terminal 124 of the battery cell, out the negative connector 612, through the load 614 and back to the cathode 206 through the positive connector 610 and positive terminal 126 of the battery cell. Alternatively, when the load 614 is replaced with a charging device connected via electrical load connection 608 and the plurality of battery cells 602 are being charged, electrons flow from the cathode 206, out the positive terminal 126 of the battery cell, out the positive connector 610, through the charging device and back to the anode 202 through the negative connector 612 and negative terminal 124 of the battery cell.

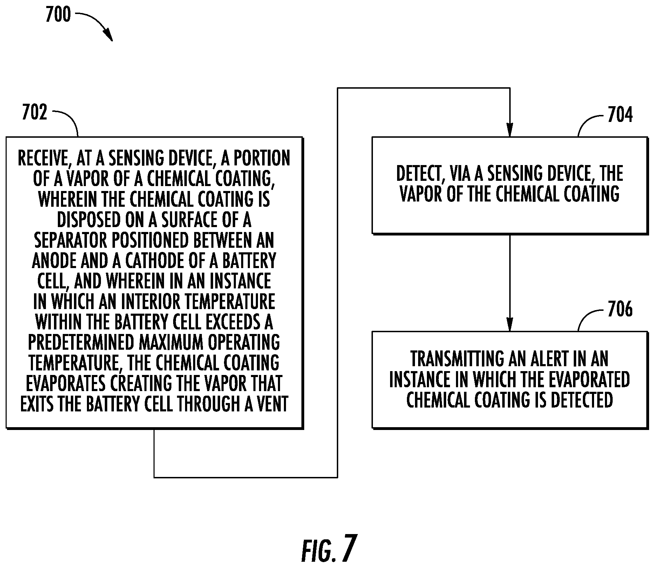

Referring now to FIG. 7, an example flow diagram illustrating an example method 700 for determining the onset and/or presence of a hazardous condition within the battery cell (e.g., battery cell 100, 200, 300, 400, 500) is illustrated, in accordance with one or more embodiments of the present disclosure. The example method 700 begins at block 702 when a sensing device (e.g., sensing device 604) receives a portion of a vapor of a chemical coating (e.g., chemical coating 402), wherein the chemical coating is disposed on a surface of a separator (e.g., separator 204) positioned between an anode (e.g., anode 202) and a cathode (e.g., cathode 206) of a battery cell and wherein in an instance in which an interior temperature within the battery cell exceeds a pre-determined maximum operating temperature, the chemical coating evaporates creating the vapor that exits the battery cell through a vent (e.g., safety vent 108). As described in relation to FIG. 4 - FIG. 5, a chemical coating may be disposed on the surface and/or within the porous material structure of the separator. The chemical coating may have a boiling temperature above but in close proximity to the pre-determined maximum operating temperature. In an instance in which a hazardous condition of the battery cell develops, causing the internal temperature of the battery cell to increase, the chemical coating may evaporate, causing a vapor containing the chemical coating to be released into the air. In such an instance, the vapor may escape the interior of the battery cell through the vent. By coating the separator with the chemical coating, the vaporization of the chemical coating may act as a signal for an increase in internal pressure above the pre-determined maximum operating temperature. Specifically, the vapor of the chemical coating may help to detect such internal hazardous conditions as short circuits from dendrite growth, diminished separator layer, or other similar instances.

The example method 700 continues at block 704 when a sensing device detects the vapor of the chemical coating. As described in relation to FIG. 6, a sensing device may comprise an optical sensing device, configured to detect the vapor of the chemical coating based on the optical properties of the vapor, and/or a gas sensor. A chemical coating may be selected based on the type of sensing device such that the vapor of the chemical coating may be distinguishable from other gasses present in and around the battery cell. For example, in an instance in which an optical sensor is used, a chemical coating exhibiting a vapor with optical properties distinguishable from other gasses may be utilized. For example, a chemical coating vapor that absorbs light of a unique set of wavelengths. Similarly, in an instance in which a gas sensor is utilized, a chemical coating that exhibits a vapor having particles that may be distinguished from other gasses in the environment surrounding the battery cell may be utilized.

The example method 700 continues at block 706 when a sensing device transmits an alert, in an instance in which the evaporated chemical coating is detected. Utilizing a chemical coating with a boiling point above the pre-determined maximum operating temperature enables a sensing device to detect a hazardous battery cell condition internal to the battery cell based on the detected chemical coating vapor. By utilizing a chemical coating with a boiling point (and/or flash point) above the pre-determined maximum operating temperature but in close proximity to the pre-determined maximum operating temperature, a hazardous condition may be detected in the early stages of development, such that mitigating measures may still be taken. For example, in some embodiments, a pre-determined maximum operating temperature may be set at 80°C. In such an instance, a chemical coating may be selected with a boiling point between 80°C and 120°C. By selecting a chemical coating with a boiling point proximate the pre-determined maximum operating temperature, the chemical coating may be vaporized in the early stages of the hazardous condition (e.g., thermal runaway) and the vapor may be detected by the sensing device. The hazardous condition may be detected while there is still time to prevent the hazardous condition from growing uncontrollably.

An alert may be any indication, warning, message, auditory or visible indicator, or other similar mechanism to provide notice of the occurring hazardous battery cell condition. In some embodiments, a sensing device, or connected device, may transmit a message to a battery management system or other managing device indicating the onset of a hazardous battery condition. In such an embodiment, the battery management system may initiate a procedure to mitigate the hazardous condition, for example, disconnect the load/charger and/or initiate measures to reduce the temperature of the battery cell or cells. In some embodiments, a sensing device may transmit a message to a graphical user interface or another user facing mechanism alerting a user of the hazardous battery cell condition. In some embodiments, the alert may prompt user action to mitigate the associated hazardous condition. In some embodiments, a light of series of lights and/or sound or series of sounds may be utilized as an alerting mechanism for the underlying hazardous battery condition.

Many modifications and other embodiments of the inventions set forth herein will come to mind to one skilled in the art to which these inventions pertain having the benefit of teachings presented in the foregoing descriptions and the associated drawings. Although the figures only show certain components of the apparatus and systems described herein, it is understood that various other components may be used in conjunction with the system. Therefore, it is to be understood that the inventions are not to be limited to the specific embodiments disclosed and that modifications and other embodiments are intended to be included within the scope of the appended claims. Moreover, the steps in the method described above may not necessarily occur in the order depicted in the accompanying diagrams, and in some cases one or more of the steps depicted may occur substantially simultaneously, or additional steps may be involved. Although specific terms are employed herein, they are used in a generic and descriptive sense only and not for purposes of limitation.

While various embodiments in accordance with the principles disclosed herein have been shown and described above, modifications thereof may be made by one skilled in the art without departing from the spirit and the teachings of the disclosure. The embodiments described herein are representative only and are not intended to be limiting. Many variations, combinations, and modifications are possible and are within the scope of the disclosure. The disclosed embodiments relate primarily to a lithium-ion cylindrical battery however, one skilled in the art may recognize that such principles may be applied to a variety of battery chemistries, shapes, and sizes. Alternative embodiments that result from combining, integrating, and/or omitting features of the embodiment(s) are also within the scope of the disclosure. Accordingly, the scope of protection is not limited by the description set out above.

Additionally, the section headings used herein are provided for consistency with the suggestions under 37 C.F.R. 1.77 or to otherwise provide organizational cues. These headings shall not limit or characterize the invention(s) set out in any claims that may issue from this disclosure.

Use of broader terms such as "comprises," "includes," and "having" should be understood to provide support for narrower terms such as "consisting of," "consisting essentially of," and "comprised substantially of" Use of the terms "optionally," "may," "might," "possibly," and the like with respect to any element of an embodiment means that the element is not required, or alternatively, the element is required, both alternatives being within the scope of the embodiment(s). Also, references to examples are merely provided for illustrative purposes, and are not intended to be exclusive.

## Claims

1. A battery cell comprising:
a battery cell package defining an interior compartment of the battery cell;
an anode disposed in the interior compartment of the battery cell;
a cathode disposed in the interior compartment of the battery cell;
a separator positioned between the anode and the cathode; and
a chemical coating disposed on the surface of the separator,
wherein in an instance in which an interior temperature within the interior compartment of the battery cell exceeds a pre-determined maximum operating temperature, the chemical coating evaporates, forming a chemical coating vapor indicating to a sensing device a condition of the battery cell.

2. The battery cell of Claim 1, wherein the chemical coating is a chemical having a boiling point between 80 degrees Celsius and 120 degrees Celsius.

3. The battery cell of Claim 1, wherein the chemical coating is a class C2 combustible liquid with a flash point below 120°C.

4. The battery cell of Claim 1, wherein the chemical coating is applied using at least one of submersion, spray coating, deposition, and curtain coating.

5. The battery cell of Claim 1, wherein the battery cell package further comprises a vent, such that the chemical coating vapor exits the interior compartment of the battery cell through the vent.

6. The battery cell of Claim 1, wherein the condition indicated is an onset of a thermal runaway event.

7. The battery cell of Claim 1, wherein the pre-determined maximum operating temperature is between 80 degrees Celsius and 120 degrees Celsius.

8. A system comprising:
a battery cell comprising:
a battery cell package defining an interior compartment of the battery cell;
an anode disposed in the interior compartment of the battery cell;
a cathode disposed in the interior compartment of the battery cell;
a separator positioned between the anode and the cathode;
a chemical coating disposed on the surface of the separator; and
a vent,
wherein in an instance in which an interior temperature within the interior compartment of the battery cell exceeds a pre-determined maximum operating temperature, the chemical coating evaporates forming a chemical coating vapor that exits the interior compartment of the battery cell through the vent; and
a sensing device disposed proximate the exterior of the battery cell,
wherein the sensing device is configured to detect the chemical coating vapor indicating a condition of the battery cell.

9. The system of Claim 8, wherein the chemical coating is a chemical having a boiling point between 80 degrees Celsius and 120 degrees Celsius.

10. The system of Claim 8, wherein the sensing device identifies the chemical coating vapor using photoionization techniques.

11. The system of Claim 8, wherein the sensing device identifies the chemical coating vapor using optical sensing techniques.

12. The system of Claim 8, wherein the condition indicated is an onset of a thermal runaway event.

13. The system of Claim 8, wherein the pre-determined maximum operating temperature is between 80 degrees Celsius and 120 degrees Celsius.

14. A method for detecting an event indicative of a battery condition, the method comprising:
receiving at a sensing device a portion of a vapor of a chemical coating,
wherein the chemical coating is disposed on a surface of a separator positioned between an anode and a cathode of a battery cell, and
wherein in an instance in which an interior temperature within the battery cell exceeds a pre-determined maximum operating temperature, the chemical coating evaporates creating the vapor that exits the battery cell through a vent;
detecting, via a sensing device, the vapor of the chemical coating, and
transmitting an alert indicating the vapor of the chemical coating is detected.

15. The method of Claim 14, wherein the chemical coating is a chemical having a boiling point between 80 degrees Celsius and 120 degrees Celsius.
